(19) Europäisches Patentamt

European Patent Office

Office européen des brevets

(11) Veröffentlichungsnummer: **0 307 664 B1**

# (12) EUROPÄISCHE PATENTSCHRIFT

(45) Veröffentlichungstag der Patentschrift: **15.04.92**

(21) Anmeldenummer: **88113630.3**

(22) Anmeldetag: **22.08.88**

(51) Int. Cl.⁵: **H02K 5/22**

(54) **Elektrische Maschine mit einem Klemmenkasten.**

(30) Priorität: **04.09.87 DE 8712025 U**

(43) Veröffentlichungstag der Anmeldung:
**22.03.89 Patentblatt 89/12**

(45) Bekanntmachung des Hinweises auf die
Patenterteilung:
**15.04.92 Patentblatt 92/16**

(84) Benannte Vertragsstaaten:
**CH DE ES FR GB IT LI NL SE**

(56) Entgegenhaltungen:
**DE-B- 2 700 530**
**FR-A- 2 159 890**

**PATENT ABSTRACTS OF JAPAN, Band 6, Nr.
81 (E-107)[959], 19. Mai 1982, Seite 149 E 107;
& JP-A-57 20 138 (**

**PATENT ABSTRACTS OF JAPAN, Band 6, Nr.
81 (E-107)[959], 19. Mai 1982, Seite 149 E 107;
& JP-A-57 20 139**

**PATENT ABSTRACTS OF JAPAN, Band 6, Nr.
77 (E-106)[955], 14. Mai 1982, Seite 134 E 106;
& JP-A-57 16 546**

(73) Patentinhaber: **SIEMENS AKTIENGESELL-
SCHAFT**
**Wittelsbacherplatz 2**
**W-8000 München 2(DE)**

(72) Erfinder: **Kirchner, Michael, Dipl.-Ing.**
**Untere Marktstrasse 10**
**W-8736 Burkardroth(DE)**

## Beschreibung

Die Erfindung betrifft eine elektrische Maschine mit einem Klemmenkasten und einem mit der Ständerwicklung verbundenen in dem Klemmenkasten angeordneten Kondensator.

Eine solche Maschine ist durch die in Patent Abstracts of Japan, Band 6, Nr. 81 (E-107) (959), 10. Mai 1982 veröffentlichte Zusammenfassung der JP-A-5720138 bekannt. Am Boden des Klemmenkastens ist eine dem Außendurchmesser des ein rundes Gehäuse aufweisenden Kondensators angepaßte Aufnahmemulde ausgebildet, in die der Kondensator eingelegt wird. Damit lassen sich nur Kondensatoren der gleichen Form und Größe in dem Klemmenkasten mit gutem Sitz unterbringen. Das bloße Einlegen der Kondensatoren in die Mulde führt dazu, daß sich die elektrischen Verbindungen der Kondensatoren mit den Wicklungsanschlüssen bei Erschütterungen der Maschine lockern können.

Der Erfindung liegt die Aufgabe zugrunde, eine Maschine der eingangs beschriebenen Art so weiterzubilden, daß Kondensatoren verschiedener Form und Größe sicher in dem Klemmenkasten angebracht werden können.

Die Lösung der gestellten Aufgabe gelingt nach der Erfindung dadurch, daß an der Innenseite mindestens einer Seitenwand des Klemmenkastens eine Befestigungseinrichtung für den Kondensator vorgesehen ist. Der Kondensator ragt bei einer solchen Befestigung an einer Seitenwand des Klemmenkastens in den freien Raum innerhalb des Klemmenkastens, so daß es für die sichere Befestigung des Kondensators nicht auf dessen Größe und Form ankommt. Dadurch, daß die Befestigungseinrichtung aus einer mit der Seitenwand verbundenen Haltelasche und einer am Gehäuse des Kondensators angeformten, der Haltelasche angepaßten Gehäusetasche besteht, gelingt die Befestigung des Kondensators durch bloßes Aufstecken auf die Haltelasche. Es besteht auch die Möglichkeit an der Seitenwand eine Gewindebohrung vorzusehen, in die ein mit dem Kondensator verbundener Gewindebolzen einschraubbar ist.

Klemmenkästen von elektrischen Maschinen besitzen in der Regel mehrere Aussparungen, um die zum Anschluß der Maschine notwendige Leitung von einer günstigen Seite her in den Klemmenkasten einführen zu können. Die nicht benötigten Aussparungen werden mittels in diese Aussparungen passende Schieber verschlossen. Für die Befestigung des Kondensators notwendige Konstruktionsänderungen an dem Klemmenkasten selbst lassen sich dadurch vermeiden, daß die Befestigungseinrichtung an einem in eine an der Seitenwand des Klemmenkastens vorgesehene Aussparung einsetzbaren Schieber vorgesehen ist. Es wird somit nur ein entsprechender mit einer Haltelasche oder einer Gewindebohrung versehener Schieber benötigt, wobei dann dieser Schieber in die für die räumliche Anordnung des Kondensators günstigste Aussparung eingesetzt werden kann.

Dadurch, daß der Kondensator als Blockkondensator ausgebildet ist, gelingt es, in dem vorhandenen Raum des Klemmenkastens Kondensatoren mit möglichst hohen Kapazitätswerten unterzubringen.

Anhand eines in der Zeichnung dargestellten Ausführungsbeispieles wird der Anmeldungsgegenstand nachfolgend näher beschrieben. Es zeigt:

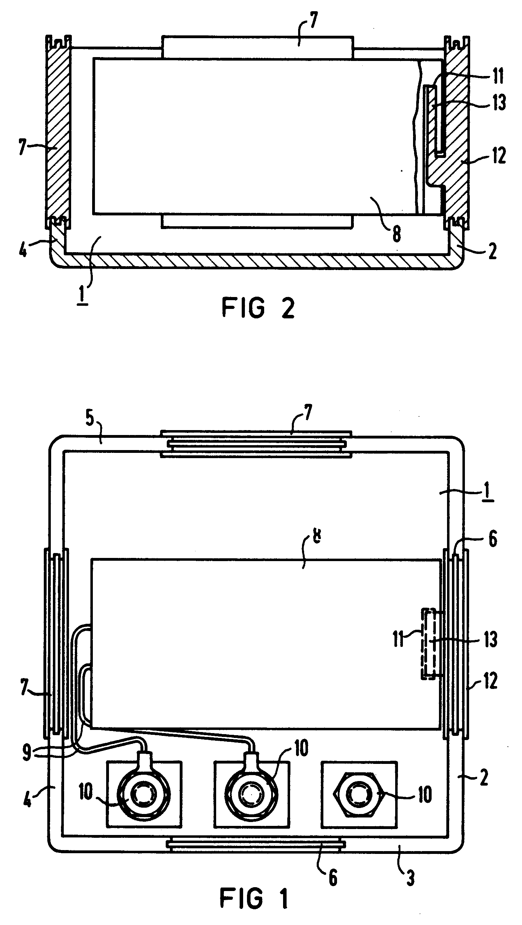

FIG 1 einen Klemmenkasten einer elektrischen Maschine in Draufsicht,

FIG 2 einen Klemmenkasten im Schnitt entlang der Linie II-II in FIG 1,

FIG 3 einen Klemmenkasten einer elektrischen Maschine mit einem als Blockkondensator ausgebildeten Kondensator,

FIG 4 einen Klemmenkasten im Schnitt bei dem eine Schraubbefestigung des Kondensators vorgesehen ist.

Ein Klemmenkasten 1 einer in der Zeichnung nicht dargestellten elektrischen Maschine weist an jeder seiner Seitenwände 2-5 eine Aussparung 6 auf. Diese Aussparungen 6 sind, wenn sie nicht für die Einführung der Anschlußleitung benötigt werden, jeweils mittels eines dafür ausgebildeten Schiebers 7 verschließbar.

Ein für das gewünschte Betriebsverhalten einer einphasigen elektrischen Maschine notwendiger Kondensator 8, der ein Anlauf- und/oder Betriebskondensator sein kann, ist in den Klemmenkasten 1 eingesetzt und mit seinen Anschlußleitungen 9 mit entsprechenden Klemmen 10, an die auch die Ständerwicklung der Maschine angeschlossen ist, verbunden.

Am Gehäuse des Kondensators 8 ist eine Gehäusetasche 11 ausgeformt, mit der der kondensator 8 auf eine entsprechende, an einem in eine der Aussparungen 6 einsteckbaren Schieber 12 angeformte Haltelasche 13 aufsteckbar ist. Damit kann der Kondensator 8, ohne daß es einer konstruktiven Änderung an dem Klemmenkasten 1 selbst bedarf, in einfacher Weise im Klemmenkasten befestigt werden.

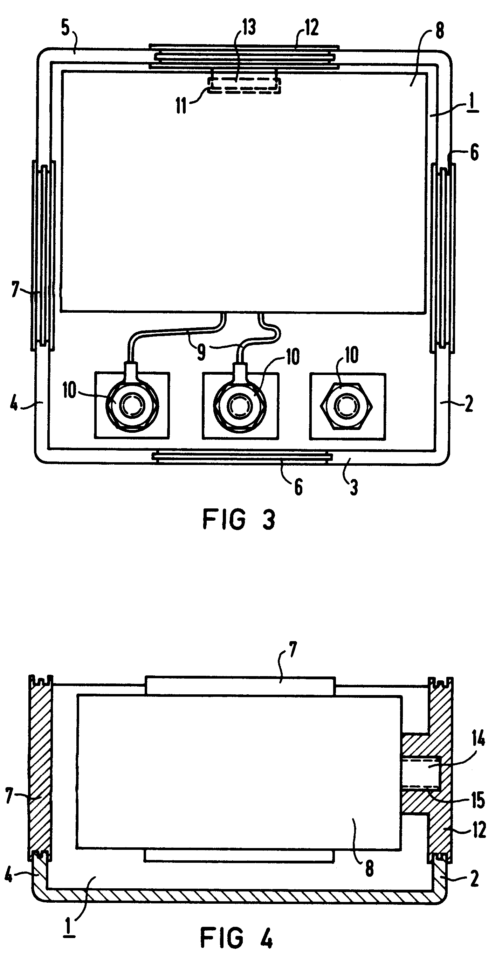

Bei dem in FIG 3 dargestellten Ausführungsbeispiel ist der Kondensator 8 als Blockkondensator ausgebildet. Durch diese Form des Kondensators 8 wird der im Klemmenkasten 1 zur Verfügung stehende Raum optimal für die Unterbringung von Kondensatoren mit möglichst hohen Kapazitätswerten genutzt. Ein solcher Blockkondensator kann einfach in den Klemmenkasten 1 eingelegt werden. Eine gesonderte Befestigung erübrigt sich jeweils dann, wenn der Blockkondensator 8 den vorhandenen Raum weitgehend ausfüllt. Ist dies nicht der Fall, dann kann auch an einem solchen Blockkondensator eine entsprechende Gehäusetasche 11 vorgesehen werden, mit der der Blockkondensator auf die an dem Schieber 12 ausgebildete Haltetasche aufsteckbar ist.

Die FIG 4 zeigt eine Schraubbefestigung des Kondensators 8. Hierzu ist an der einen Stirnseite des Kondensators 8 ein Gewindebolzen 14 angebracht, der in eine entsprechende Gewindebohrung 15 des Schiebers 12 einschraubbar ist.

**Patentansprüche**

1. Elektrische Maschine mit einem Klemmenkasten und einem mit der Ständerwicklung verbundenen in dem Klemmenkasten (1) angeordneten Kondensator, **dadurch gekennzeichnet,** daß an der Innenseite mindestens einer Seitenwand (2-5) des Klemmenkastens (1) eine Befestigungseinrichtung (13) für den Kondensator (8) vorgesehen ist.

2. Elektrische Maschine nach Anspruch 1, **dadurch gekennzeichnet,** daß die Befestigungseinrichtung aus einer mit einer der Seitenwände (2-5) verbundenen Haltelasche (13) und einer am Gehäuse des Kondensators (8) angeformten, der Haltelasche (13) angepaßten Gehäusetasche (11) besteht.

3. Elektrische Maschine nach Anspruch 1 oder 2, **dadurch gekennzeichnet,** daß die Befestigungseinrichtung an einem in eine an mindestens einer der Seitenwände (2-5) des Klemmenkastens (1) vorgesehene Aussparung (6) einsetzbaren Schieber (12) vorgesehen ist.

4. Elektrische Maschine nach Anspruch 2 und 3, **dadurch gekennzeichnet,** daß die Haltelasche (13) an dem Schieber (12) angeformt ist.

5. Elektrische Maschine nach Anspruch 1, **dadurch gekennzeichnet,** daß an einer Seitenwand (2-5) oder einem in eine Aussparung (6) der Seitenwand einsetzbaren Schieber (12) eine Gewindebohrung (15) vorgesehen ist, in die ein mit dem Kondensator (8) verbundener Gewindebolzen (14) einschraubbar ist.

6. Elektrische Maschine nach Anspruch 1, **dadurch gekennzeichnet,** daß der Kondensator (8) als Blockkondensator ausgebildet ist.

**Claims**

1. An electric machine with a terminal box and a capacitor connected to the stator winding and arranged in the terminal box (1), characterised in that on the inner side of at least one side wall (2-5) of the terminal box (1) there is provided a securing device (13) for the capacitor (8).

2. An electric machine according to claim 1, characterised in that the securing device consists of a holding bracket (13) connected to one of the side walls (2-5), and a housing trap (11) adapted to the holding bracket (13) and preformed on the housing of the capacitor (8).

3. An electric machine according to claim 1 or 2, characterised in that the securing device is provided on a slide (12), able to be inserted into a recess (6) provided on at least one of the side walls (2-5) of the terminal box (1).

4. An electric machine according to claim 2 and 3, characterised in that the holding bracket (13) is preformed on the slide (12).

5. An electric machine according to claim 1, characterised in that provided on a side wall (2-5) or on a slide (12), able to be inserted into a recess (6) of the side wall, there is a threaded bore (15), into which a threaded bolt (14), connected to the capacitor, (8) is able to be screwed.

6. An electric machine according to claim 1, characterised in that the capacitor (8) is formed as a block capacitor.

**Revendications**

1. Machine électrique comportant une boîte à bornes et un condensateur raccordé à l'enroulement statorique et disposé dans la boîte à bornes (1), caractérisée par le fait qu'un dispositif de fixation (13) pour le condensateur (8) est prévu sur la face intérieure d'au moins une paroi latérale (2-5) de la boîte à bornes (1).

2. Machine électrique suivant la revendication 1, caractérisée par le fait que le dispositif de fixation est constitué par une patte de retenue (13) raccordée à l'une des parois latérales (2-5) et par une patte de boîtier (11) formée par moulage sur le boîtier du condensateur (8) et adaptée à la patte de retenue (13).

3. Machine électrique suivant les revendications 1 ou 2, caractérisée par le fait que le dispositif de fixation est prévu sur un tiroir (12) pouvant être inséré dans un évidement (6) ménagé au moins dans l'une des parois latérales (2-5) de la boîte à bornes (1).

**4.** Machine électrique suivant les revendications 2 et 3, caractérisée par le fait que la patte de retenue (13) est formée par moulage sur le tiroir (12).

**5.** Machine électrique suivant la revendication 1, caractérisée par le fait que dans une paroi latérale (2-5) ou dans un tiroir (12) pouvant être inséré dans un évidement (6) de la paroi latérale est prévu un trou taraudé (15), dans lequel peut être vissé un boulon fileté (14) raccordé au condensateur (8).

**6.** Machine électrique suivant la revendication 1, caractérisée par le fait que le condensateur (8) est réalisé sous la forme d'un condensateur en boîtier.

FIG 2

FIG 1

FIG 3

FIG 4